# FASCICULE DE BREVET EUROPEEN

(11) **EP 3 062 375 B1**
(45) Date de publication et mention de la délivrance du brevet: **06.07.2022**
(21) Numéro de dépôt: 16162897.9
(22) Date de dépôt: 20.06.2013
(51) Int. Cl.: H01M 4/92, H01M 8/10

(54) **PROCÉDÉ DE PRÉPARATION DE NANOPARTICULES DE CATALYSEUR POUR LA RÉDUCTION CATHODIQUE DU DIOXYGÈNE EN PRÉSENCE DE MÉTHANOL**
VERFAHREN ZUR HERSTELLUNG VON NANOPARTIKELN EINES KATALYSATORS FÜR DIE KATHODISCHE REDUKTION VON DISAUERSTOFF IN GEGENWART VON METHANOL
PROCESS FOR PREPARING CATALYST NANOPARTICLES FOR CATHODIC REDUCTION OF DIOXYGEN IN THE PRESENCE OF METHANOL

(30) Priorité: 22.06.2012 FR 1255944
(43) Date de publication de la demande: 31.08.2016
(62) Demande divisionnaire de: 13729778.4
(73) Titulaire: Centre National de la Recherche Scientifique, 75016 Paris (FR); UNIVERSITE DE POITIERS, 86034 Poitiers Cedex (FR)
(72) Inventeur: ALONSO-VANTE, Nicolas, 86180 BUXEROLLES (FR); MA, Jiwei, 75014 PARIS (FR); GAGO, Aldo, 86022 POITIERS CEDEX (FR)
(74) Mandataire: Novagraaf Technologies

(56) Documents cités:
- EP-A1- 2 009 721
- CN-A- 102 101 056
- JP-A- 2010 003 576
- US-A1- 2007 078 052
- US-A1- 2009 011 311
- WANG ET AL: "Synthesis and characterization of Pt-Se/C electrocatalyst for oxygen reduction and its tolerance to methanol", JOURNAL OF POWER SOURCES, ELSEVIER SA, CH, vol. 171, no. 2, 8 septembre 2007 (2007-09-08), pages 471-476, XP022238047, ISSN: 0378-7753, DOI: 10.1016/J.JPOWSOUR.2007.06.254
- SEROV A A ET AL: "Synthesis, characterization and catalytic activity of RuFeSe/C as a cathode catalyst for low-temperature fuel cells", CATALYSIS COMMUNICATIONS, ELSEVIER SCIENCE, AMSTERDAM, NL, vol. 10, no. 11, 10 juin 2009 (2009-06-10) , pages 1551-1554, XP026128202, ISSN: 1566-7367, DOI: 10.1016/J.CATCOM.2009.04.015 [extrait le 2009-04-19]
- KJEANG E ET AL: "Microfluidic fuel cells: A review", JOURNAL OF POWER SOURCES, ELSEVIER SA, CH, vol. 186, no. 2, 15 January 2009 (2009-01-15), pages 353-369, XP025839940, ISSN: 0378-7753, DOI: 10.1016/J.JPOWSOUR.2008.10.011 [retrieved on 2008-10-17]

## Description

La présente invention concerne un procédé (P2) de préparation de nanoparticules de catalyseur de réduction cathodique du dioxygène et tolérant au méthanol, ces nanoparticules comprenant un centre métallique et une sous-monocouche d'un chalcogène.

La présente divulgation concerne également des nanoparticules de catalyseur pouvant être obtenues par ledit procédé.

La présente divulgation concerne également une cathode pour pile, notamment pour pile à combustible au méthanol direct comprenant lesdites nanoparticules.

Les piles à combustible peuvent améliorer sensiblement l'efficacité de conversion de l'énergie, réduire les émissions nocives et la dépendance au pétrole comme source d'énergie.

Cette technologie a de larges applications dans les transports et dans les appareils électriques ou électroniques portables, comme les téléphones portables.

L'utilisation de méthanol dans des piles à combustible est bien connue.

Néanmoins, les cathodes classiquement utilisées dans ce type de pile, notamment à base de platine, peuvent oxyder le méthanol, de sorte que l'efficacité de la pile s'en trouve affectée.

Plusieurs documents ont décrit des améliorations de cathodes utilisées dans les piles à combustible en présence de méthanol.

Le document WO 2010/096616 décrit un procédé d'obtention de nanoparticules de CoSe₂ supporté sur du carbone en tant que cathode pour piles à combustible en présence de méthanol.

Le document US 7 851 399 décrit un procédé de préparation de nanoparticules de catalyseur comprenant un métal de transition et un chalcogène en tant que cathode pour piles à combustible en présence de méthanol.

Le document EP2009721 décrit un catalyseur cathodique pour une pile à combustible à réactif mixte comprenant un catalyseur mixte qui comprend un premier catalyseur comprenant un composé Ru-Ch1 où Ch1 est un chalcogénure choisi dans le groupe constitué de S, Se, Te et leurs combinaisons, et un second catalyseur comprenant un composé Pt-Ch2 où Ch2 est un chalcogénure choisi dans le groupe constitué de S, Se, Te et leurs combinaisons. Le catalyseur cathodique est décrit comme améliorant les caractéristiques de puissance d'une pile à combustible en raison de l'excellente activité et sélectivité du catalyseur.

Le document US2007078052 décrit un matériau catalytique tolérant le méthanol et son procédé de préparation. Ces matériaux sont basés sur des agrégats organométalliques contenant (i) un groupe carbonyle ou un groupe ligand hydrocarboné insaturé cyclique, et (ii) un groupe contenant un chalcogène choisi parmi MnFepXm, MnXm, MnClpXm, ou leurs mélanges dans lesquels M = Pt, Ru ou Re, X = S, Se ou Te, et m, n et p = 1 ou 2. Les matériaux catalytique sont obtenus en mélangeant ensemble des agrégats organométalliques de composition définie avec un composant électriquement conducteur dans un solvant organique, élimination ultérieure du solvant, et dans un environnement non oxydant, traitement thermique des agrégats adsorbées sur le composant électriquement conducteur au niveau du température d'au moins 175 °C.

Le document « Synthesis and characterization of Pt-Se/C electrocatalyst for oxygen reduction and its tolerance to methanol » (WANG et al., Journal of Power Sources, Volume 171, Issue 2, 2007, 471-476, https://doi.org/10.1016/j.jpowsour.2007.06.254) décrit le catalyseur Pt-Se/C pour la réaction de réduction de l'oxygène (ORR) lequel a été préparé par une méthode colloïdale organique modifiée avec du citrate de sodium et de la triphénylphosphine comme agents complexants. Ledit catalyseur y est décrit comme montrant une activité similaire à celle du catalyseur Pt/C, et comme ayant une plus grande tolérance au méthanol que le catalyseur Pt/C.

Le document JP2010003576 décrit un procédé de fabrication d'un catalyseur d'électrode pour une pile à combustible remplaçant le platine et ayant des performances de réduction à quatre électrons et une propriété de recyclage élevée sans utiliser de Fe carbonyle ou Ni carbonyle, décrites comme des substances toxiques dans un procédé de fabrication.

Un procédé de préparation d'un catalyseur platine-sulfure supporté sur du carbone, par traitement thermique d'un précurseur chimique obtenu par réaction de soufre et de sels de platine à température ambiante, a été décrit (Y.Gochi-Ponce, Electrochem.Commun, 2006, 8, 1487-1491).

Un procédé de préparation d'un catalyseur platine-sélénium supporté sur du carbone, par modification organique colloïdale en présence de citrate de sodium et triphénylphosphine comme agents complexants, a été décrit (R.F. Wang, J.Power Sources, 2007, 171, 471-476). Cependant, les catalyseurs de l'état de la technique ne permettent pas d'obtenir un compromis satisfaisant entre activité électrocatalytique et stabilité en présence de méthanol.

De plus, les procédés de l'état de la technique ne permettent pas de déterminer la composition optimale du catalyseur pour obtenir un tel compromis.

Ainsi, un premier objectif de l'invention est de proposer un procédé de préparation de nanoparticules de catalyseur de réduction cathodique du dioxygène, et en particulier tolérant au méthanol, qui apporte une solution à tout ou partie des problèmes des procédés de l'état de la technique.

Un autre objectif de l'invention est de proposer un procédé de préparation de nanoparticules de catalyseur de réduction cathodique du dioxygène, et en particulier tolérant au méthanol, aisé à mettre en oeuvre et dont le rendement est amélioré, pouvant ainsi être transposé à une échelle industrielle, tout en n'ayant pas ou très peu d'impact sur l'environnement.

Un autre objectif de l'invention est de proposer un procédé de préparation de nanoparticules de catalyseur de réduction cathodique du dioxygène, et en particulier tolérant au méthanol, permettant l'accès à des catalyseurs de composition nouvelle.

La présente divulgation a pour objet un procédé (P1) de préparation de nanoparticules de catalyseur de réduction cathodique du dioxygène et tolérant au méthanol comprenant
(a) un centre métallique comprenant au moins un métal de transition supporté ou non supporté et choisi parmi le platine, le ruthénium, le palladium, le rhodium ou l'iridium;
(b) une sous-monocouche d'un chalcogène choisi parmi le sélénium ou le soufre ; en un ratio molaire R d'activité électrocatalytique maximale (chalcogène/métal de transition) inférieur à 1 ;
comprenant
i) la préparation de nanoparticules de catalyseur comprenant du métal de transition supporté ou non supporté recouvert d'une sous-monocouche du chalcogène en un ratio molaire R¹ (chalcogène/métal de transition) inférieur ou égal à 1 ;
ii) la préparation d'une cellule électrochimique comprenant une électrode de travail, une électrode de référence et une électrode auxiliaire, une solution électrolytique comprenant du méthanol et des nanoparticules de catalyseur déposées à la surface de l'électrode de travail en une masse spécifique allant de 0,010 à 0,300 mg par cm² d'électrode de travail ;
iii) la mesure de l'activité électrocatalytique de la cellule électrochimique par application d'un potentiel d'oxydation allant de 0,8 à 1,4 V, sous atmosphère inerte et pendant une durée allant de 0 à 40 min ;
iv) la détermination du potentiel de demi-vague E_{1/2} en fonction du temps d'application du potentiel d'oxydation ;
v) la détermination du taux de recouvrement résiduel du centre métallique par le chalcogène pour lequel le potentiel de demi-vague E_{1/2} est maximal ;
vi) la détermination de la valeur du ratio R du catalyseur.

Par sous-monocouche d'un chalcogène, on entend le recouvrement du centre métallique par une couche discontinue de chalcogène à la surface du centre métallique.

Par ratio molaire d'activité électrocatalytique maximale R, on entend le ratio molaire (chalcogène/métal de transition) du catalyseur permettant d'obtenir l'activité électrocatalytique maximale en présence de méthanol.

Par catalyseur tolérant au méthanol, on entend un catalyseur dont l'activité électrocatalytique n'est pas affectée ou n'est que très peu affectée par la présence de méthanol, de préférence l'activité électrocatalytique est réduite de moins de 20% en présence de méthanol.

Le ratio R¹ peut aller de 0,001 à 1, de préférence de 0,3 à 0,9, avantageusement de 0,5 à 0,7.

Selon l'invention, le centre métallique peut comprendre au moins un métal de transition supporté et choisi parmi le platine, le ruthénium, le palladium, le rhodium ou l'iridium.

De manière avantageuse, le centre métallique comprend du platine supporté.

Selon l'invention, le support peut comprendre du carbone.

Selon l'invention, le support peut comprendre du carbone amorphe, des nanotubes de carbone ou du graphène.

Selon l'invention, le support peut comprendre un composite oxyde-carbone, de préférence choisi parmi les composites TiO2-carbone, WO₃-carbone ou SnO₂-carbone.

Selon la présente divulgation, de manière avantageuse, le procédé (P1) comprend en outre,
vii) la préparation sous agitation d'un mélange du métal de transition supporté ou non supporté avec un mélange d'eau et d'isopropanol en un ratio v/v allant de 2/1 à 10/1 pendant une durée allant de 5 à 60 minutes;
viii) l'addition d'un composé inorganique comprenant un chalcogène en un ratio molaire R (chalcogène/métal de transition);
ix) l'agitation à une température allant de 20 à 50°C pendant une durée allant de 5 à 24 heures, de préférence de 10 à 20 heures;
x) l'évaporation de l'eau et de l'isopropanol ;
xi) la calcination, sous atmosphère inerte, à une température allant de 100 à 400 °C, pendant une durée allant de 30 min à 2 heures.

Selon la présente divulgation, le mélange v/v d'eau et d'isopropanol comprend un volume supérieur d'eau par rapport au volume d'éthanol.

De manière avantageuse, selon l'invention, le ratio v/v eau/isopropanol de l'étape vii) va de 3/1 à 7/1, de préférence est égal à 5/1.

De manière avantageuse, selon la présente divulgation, le composé inorganique de l'étape viii) comprenant un chalcogène peut être choisi parmi les oxydes et les sels.

Comme exemples d'oxyde, on peut citer l'oxyde de sélénium.

Comme exemples de sel, on peut citer le sulfure de sodium.

Selon la présente divulgation, l'évaporation de l'eau et de l'isopropanol de l'étape x) peut être effectuée par toute technique usuelle et connue de l'homme du métier.

On peut citer par exemple, la méthode par chauffage sous atmosphère contrôlée.

Selon la présente divulgation, la préparation des nanoparticules de catalyseur de l'étape i) peut être effectuée par tout procédé connu de l'homme du métier permettant de préparer des nanoparticules de catalyseur comprenant un métal de transition supporté ou non supporté dont la surface est modifiée par une sous-monocouche d'un chalcogène.

Comme exemple, on peut citer le procédé décrit dans le document US 7 851 399.

Selon la présente divulgation, de manière également avantageuse, la préparation de nanoparticules de catalyseurs de l'étape i) comprend,
i.a) la préparation sous agitation d'un mélange du métal de transition supporté ou non supporté avec un mélange d'eau et d'isopropanol en un ratio v/v allant de 2/1 à 10/1 pendant une durée allant de 5 à 60 minutes;
i.b) l'addition d'un composé inorganique comprenant un chalcogène en un ratio molaire R¹ (chalcogène/métal de transition) inférieur ou égal à 1;
i.c) l'agitation à une température allant de 20 à 50°C pendant une durée allant de 5 à 24 heures; de préférence de 10 à 20 heures ;
i.d) l'évaporation de l'eau et de l'isopropanol ;
i.e) la calcination, sous atmosphère inerte, à une température allant de 100 à 400 °C, pendant une durée allant de 30 min à 2 heures.

De manière avantageuse, selon la présente divulgation, le mélange v/v d'eau et d'isopropanol de l'étape i.a) comprend un volume supérieur d'eau par rapport au volume d'éthanol.

De manière avantageuse, selon la présente divulgation, le ratio v/v eau/isopropanol de l'étape i.a) va de 3/1 à 7/1, de préférence est égal à 5/1.

De manière avantageuse, selon la présente divulgation, le composé inorganique de l'étape i.b) comprenant un chalcogène peut être choisi parmi les oxydes et les sels.

Comme exemples d'oxyde, on peut citer l'oxyde de sélénium.

Comme exemples de sel, on peut citer le sulfure de sodium.

Selon la présente divulgation, l'évaporation de l'eau et de l'isopropanol de l'étape i.d) peut être effectuée par toute technique usuelle et connue de l'homme du métier.

On peut citer par exemple, la méthode par chauffage sous atmosphère contrôlée.

L'invention concerne un procédé (P2) de préparation de nanoparticules de catalyseur amélioré.

Selon l'invention, le procédé (P2) est un procédé aisé à mettre en oeuvre et dont le rendement est amélioré, pouvant ainsi être transposé à une échelle industrielle, tout en n'ayant pas ou très peu d'impact sur l'environnement.

Les définitions et caractéristiques préférées du métal de transition, du chalcogène et du support présentées pour le procédé (P1) s'appliquent au procédé (P2).

De manière avantageuse, le métal de transition est le platine, le chalcogène est le sélénium, le ratio R¹ va de 0,5 à 0,7 et le ratio R est inférieur à 0,5, de préférence inférieur ou égal à 0,3, avantageusement va de 0,1 à 0,3.

De manière également avantageuse, le métal de transition est le platine, le chalcogène est le soufre, le ratio R¹ va de 0,5 à 0,7 et le ratio R est inférieur ou égal à 0,5, de préférence va de 0,1 à 0,3.

De manière également avantageuse, le métal de transition est le ruthénium, le ratio R¹ est inférieur ou égal à 1 et le ratio R est inférieur ou égal à 0,5, de préférence va de 0,05 à 0,5.

Selon l'invention, le centre métallique peut également comprendre un métal supplémentaire supporté ou non supporté choisi parmi l'or, le titane, l'étain, le cobalt, le nickel, le fer ou le chrome, de préférence le titane.

De manière avantageuse, le métal supplémentaire est supporté.

Les définitions et caractéristiques du support présentées pour le métal de transition dans le procédé (P1) s'appliquent pour le support du métal supplémentaire.

Selon la présente divulgation, le ratio atomique (métal de transition/métal supplémentaire) dans le procédé (P1) va de 1 à 19.

Selon la présente divulgation, l'électrode de travail de l'étape ii) du procédé (P1) comprend un métal choisi parmi l'or, le titane, l'étain, le cobalt, le nickel, le fer, le chrome, de préférence l'or ou le titane.

Par électrode de référence on entend toute électrode dont le potentiel est fixe.

Selon l'invention, l'électrode de référence dans le procédé (P1) peut être choisie parmi les électrodes de référence usuelles et connues de l'homme du métier.

Comme exemples d'électrode de référence, on peut citer l'électrode standard à hydrogène (ESH) ou l'électrode réversible à hydrogène (ERH).

Selon la présente divulgation, l'électrode auxiliaire dans le procédé (P1) peut être choisie parmi les électrodes auxiliaires usuelles et connues de l'homme du métier.

Comme exemple d'électrode auxiliaire, on peut citer les électrodes en carbone.

Selon la présente divulgation, la solution électrolytique de l'étape ii) dans le procédé (P1) peut être une solution acide.

Selon la présente divulgation, la solution électrolytique de l'étape ii) dans le procédé (P1) peut comprendre un acide choisi parmi l'acide perchlorique, l'acide phosphorique ou l'acide sulfurique.

De manière avantageuse, la solution électrolytique comprend de l'acide sulfurique.

Selon la présente divulgation, la concentration molaire de la solution électrolytique de l'étape ii) dans le procédé (P1) en acide peut aller de 0,1M à 2M.

Selon la présente divulgation, la concentration molaire de la cellule électrochimique de l'étape ii) dans le procédé (P1) en méthanol peut aller de 0,1M à 20M, de préférence de 0,5M à 5M.

Selon la présente divulgation, le potentiel d'oxydation de l'étape iii) dans le procédé (P1) peut varier en fonction de la nature du métal de transition.

Ainsi, de manière avantageuse dans la présente divulgation, lorsque le métal de transition est choisi parmi le platine, le rhodium, le palladium ou l'iridium, le potentiel d'oxydation de l'étape iii) dans le procédé (P1) va de 1 à 1,2V.

Par potentiel de demi-vague, on entend la forme de la vague et sa position pour un système électrochimique qui dépend du régime cinétique, comme dans la réaction de réduction du dioxygène.

Selon la présente divulgation, le potentiel de demi-vague de l'étape iv) dans le procédé (P1) peut être déterminé par toute mesure usuelle et connue de l'homme du métier.

Comme exemple, on peut citer la mesure à l'aide de la technique d'électrode tournante à disque (Rotating Disk Electrode ou RDE), comme décrit par exemple dans Bard et *al* (Bard et al, Electrochemical Methods: Fundamentals and Applications, John Wiley & Sons, NY, 2nd Ed., 2002).

Selon la présente divulgation, la détermination du taux de recouvrement résiduel de l'étape v) dans le procédé (P1) peut être effectuée par toute méthode usuelle et connue de l'homme du métier.

L'homme du métier, en fonction de la nature du métal de transition du centre métallique selon l'invention, est à même de déterminer la méthode la plus adaptée.

Comme exemple de méthode adaptée au platine et au rhodium, on peut citer la méthode par dépôt sous potentiel (underpotential deposition of hydrogen) comme décrit par exemple dans Elezovic et *al* (Elezovic et al, Int. J. Hydrogen Energy 32 (2007), 1991-1998).

On peut également citer la méthode dite par CO-stripping, comme décrit par exemple dans le document Vidakovic et *al* (Vidakovic et al, Electrochim. Acta 52 (2007), 5606-5613) particulièrement adaptée au platine, au rhodium, au ruthénium et à l'iridium.

On peut également citer la méthode par réduction d'une monocouche d'oxyde de palladium en palladium, comme décrit par exemple dans Lan-lan et *al* (Lan-lan et al, Chinese J. Chem. Phys, 23 (2010) 543-548), particulièrement adaptée au palladium.

Selon la présente divulgation, la valeur du ratio R de l'étape vi) est déterminée à partir de la valeur du taux de recouvrement résiduel de l'étape v) par dépôt sous potentiel d'hydrogène déterminé dans un domaine de potentiel, par l'adsorption et désorption d'une monocouche d'hydrogène.

Ce processus correspond à une charge de 210 µC.cm⁻² pour une monocouche d'hydrogène adsorbée.

Cette méthode est notamment décrite dans Elezovic et *al* (Elezovic et al, Int. J. Hydrogen Energy 32 (2007), 1991-1998).

Selon l'invention, la taille des nanoparticules issues du procédé va de 1 à 10 nm, de préférence de 2 à 3 nm.

Un objet de la présente invention concerne un procédé (P2) de préparation de nanoparticules d'un catalyseur tolérant au méthanol comprenant
a) un centre métallique comprenant au moins un métal de transition supporté ou non supporté et choisi parmi le platine, le ruthénium, le palladium, le rhodium ou l'iridium ;
(b) une sous-monocouche d'un chalcogène choisi parmi le sélénium ou le soufre, ladite monocouche étant le recouvrement du centre métallique par une couche discontinue d'atome de chalcogène à la surface du centre métallique ;
comprenant
i) la préparation sous agitation d'un mélange du métal de transition supporté ou non supporté avec un mélange d'eau et d'isopropanol en un ratio v/v allant de 2/1 à 10/1 pendant une durée allant de 5 à 60 minutes;
ii) l'addition d'un composé inorganique comprenant un chalcogène en un ratio molaire (chalcogène/centre métallique) inférieur ou égal à 1, de préférence allant de 0,001 à 1 ;
iii) l'agitation à une température allant de 20 à 50°C pendant une durée allant de 5 à 24 heures, de préférence de 10 à 20 heures ;
iv) l'évaporation de l'eau et de l'isopropanol ;
v) la calcination, sous atmosphère inerte, à une température allant de 100 à 400 °C, pendant une durée allant de 30 min à 2 heures.

Selon l'invention, le mélange d'eau et d'isopropanol de l'étape i) du procédé (P2) comprend une teneur en volume d'eau supérieure à la teneur en volume d'éthanol.

Selon l'invention, le ratio v/v eau/isopropanol de l'étape i) du procédé (P2) va de 3/1 à 7/1, de préférence est égal à 5/1.

Selon l'invention, le composé inorganique de l'étape ii) du procédé (P2) comprenant un chalcogène peut être choisi parmi les oxydes et les sels.

Comme exemples d'oxyde, on peut citer l'oxyde de sélénium.

Comme exemples de sel, on peut citer le sulfure de sodium.

Selon l'invention, l'évaporation de l'eau et de l'isopropanol de l'étape iv) du procédé (P2) peut être effectuée par toute technique usuelle et connue de l'homme du métier.

On peut citer par exemple, la méthode par chauffage sous atmosphère contrôlée.

De manière avantageuse, le ratio molaire (chalcogène/centre métallique) est inférieur à 0,5, de préférence inférieur ou égal à 0,3, avantageusement va de 0,1 à 0,3.

Selon la présente divulgation ou selon l'invention, respectivement, les nanoparticules de catalyseur issues du procédé (P1) ou (P2) sont déposées à la surface d'une cathode constitutive d'une pile, dans une quantité allant de 0,1 à 2 mg par cm² de cathode.

Un autre objet de la présente divulgation concerne des nanoparticules de catalyseur comprenant un centre métallique comprenant du platine supporté ou non et recouvert d'une sous-monocouche de sélénium dans un ratio (sélénium/platine) allant de 0,1 à 0,5, de préférence de 0,1 à 0,3, susceptibles d'être obtenues par le procédé (P1) ou (P2) selon l'invention.

Un autre objet de la présente divulgation concerne des nanoparticules de catalyseur comprenant un centre métallique comprenant du platine supporté ou non supporté et recouvert d'une sous-monocouche de soufre en un ratio (soufre/platine) allant de 0,1 à 0,5, susceptibles d'être obtenues par le procédé (P1) ou (P2) selon l'invention.

Selon l'invention, la taille des nanoparticules va de 1 à 10 nm, de préférence 2 à 3 nm.

Un autre objet de la présente divulgation concerne l'utilisation des nanoparticules de catalyseur selon l'invention en tant que catalyseur de la réaction de réduction du dioxygène en présence de méthanol.

Un autre objet de la présente divulgation concerne une cathode pour pile comprenant des nanoparticules selon l'invention.

Selon la présente divulgation, la cathode peut être une cathode pour pile à combustible au méthanol direct, une cathode pour pile microfluidique à combustible.

Par pile microfluidique à combustible, on entend une pile dont le combustible et le comburant sont associés sans se mélanger sous forme de liquide dans le flux d'un micro canal, nommée Laminar Flow Fuel Cell (LFFC) ou une pile microfluidique à combustible dont le combustible et le comburant sont mélangés, nomée Mixed Reactant Fuel Cell (MRFC).

Un autre objet de la présente divulgation concerne une pile comprenant une cathode comprenant des nanoparticules selon l'invention.

Selon la présente divulgation, la pile peut être une pile à combustible au méthanol direct.

Selon la présente divulgation, la pile peut être une pile microfluidique à combustible.

De manière avantageuse, la pile est une pile microfluidique à combustible au méthanol direct.

Selon la présente divulgation, la surface de la cathode présente dans la pile a une quantité de nanoparticules de catalyseur allant 0,1 à 2 mg par cm².
La figure 1 représente la chronoamperométrie pour différentes durées de stripping mises en œuvre.
La figure 2 représente les courbes de réduction du dioxygène à 900 tours par minute mesurées après la mesure chronoampèrométrique à 1,1 V pendant différents temps de stripping.
La figure 3 représente le potentiel de demi-vague E_{1/2} en fonction de la durée de stripping.
Les figures 4, 5 et 6 représentent respectivement le potentiel de demi-vague E_{1/2} en fonction du temps de stripping compris entre 0 et 40 min et pour une quantité de catalyseur déposée de 20 µg, de 81 µg et de 162 µg.

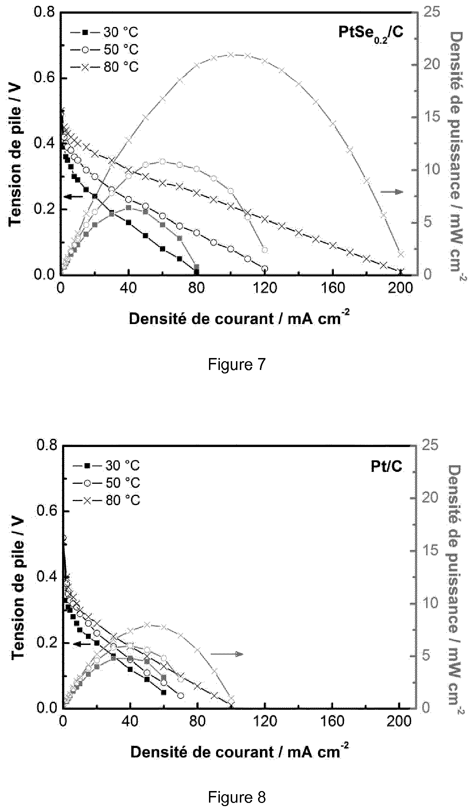

La figure 7 représente simultanément les courbes de tension de pile et les courbes de densité de puissance en fonction de la densité de courant à des températures de 30°C, 50°C et 80°C pour des nanoparticules de catalyseur ayant un ratio molaire R (sélénium/platine) égal à 0,2 (PtSe_{0,2}/C) dans une pile à combustible au méthanol direct (DMFC).
La figure 8 représente simultanément les courbes de tension de pile et les courbes de densité de puissance en fonction de la densité de courant à des températures de 30°C, 50°C et 80°C pour des catalyseurs Pt/C dans une pile à combustible au méthanol direct (DMFC).

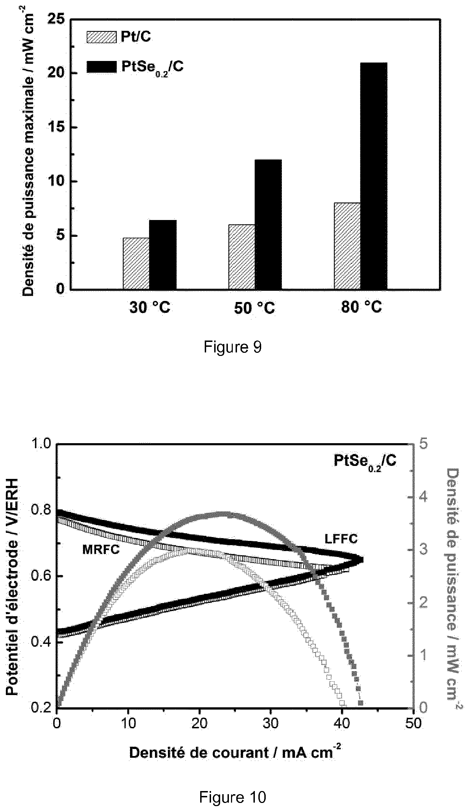

La figure 9 représente un diagramme comparatif des valeurs de densité de puissance maximale de nanoparticules de catalyseur ayant un ratio molaire R (sélénium/platine) égal à 0,2 (PtSe_{0,2}/C) et d'un catalyseur (Pt/C) dans une pile à combustible au méthanol direct à des températures de 30°C, 50°C et 80°C.
La figure 10 représente simultanément les courbes de potentiel d'électrode (cathode et anode) et les courbes de densité de puissance en fonction de la densité de courant à une température de 25°C pour des nanoparticules de catalyseurs ayant un ratio molaire R (sélénium/platine) égal à 0,2 (PtSe_{0,2}/C) dans une pile microfluidique de type LFFC (laminar flow fuel cell) et de type MRFC (mixed-reactant fuel cell).

Les différents objets de l'invention et leurs modes de réalisation seront mieux compris à la lecture des exemples qui suivent. Ces exemples sont donnés à titre indicatif, sans caractère limitatif.

### Exemple 1 : préparation de nanoparticules de catalyseur de platine supporté sur du carbone et recouvert d'une sous-monocouche de sélénium en un ratio molaire (sélénium/platine) R¹ égal à 0,5 (PtSe_{0,5}/C) selon l'étape i) du procédé (P1) ou selon le procédé (P2)

Tout d'abord, un composite de platine supporté sur du carbone (Pt/C) a été synthétisé par la méthode carbonyle.

Un mélange d'hexachloroplatinate de sodium de formule Na₂PtCl₆.6H₂O (1 mole) et d'acétate de sodium (6 moles) en un ratio molaire (hexachloroplatinate de sodium/acétate de sodium) égal à 0,16 a été réalisé sous atmosphère d'azote pendant 30 minutes.

La réaction a ensuite été activée pendant 15 minutes à 55°C en présence de monoxyde de carbone sous agitation.

Un complexe platine-carbonyle a été obtenu après 24 heures.

Du carbone a été ensuite ajouté sous un flux d'azote puis la solution a été maintenue sous agitation pendant 12 h sous atmosphère d'azote.

Le solvant a ensuite été évaporé par chauffage à 80 °C sous azote.

La poudre du composé Pt/C a ensuite été récupérée par lavage et filtration avec de l'eau ultra-pure.

Par la suite, le composé (Pt/C) a été modifié sur sa surface avec des atomes de sélénium par un procédé de sélénisation.

Pour cela, le composé Pt/C (62,5 mg) et de l'oxyde de sélénium SeO₂ (3,8 mg) ont été mélangés dans une solution aqueuse d'isopropanol (30 mL) dans un ratio v/v (eau/isopropanol) égal à 5 et agité pendant 12 h à température ambiante.

La poudre résultante est chauffée à 200°C pendant 1 h sous atmosphère d'azote.

Le catalyseur obtenu est constitué de platine supporté sur du carbone et modifié en surface par une sous-monocouche de sélénium en un ratio molaire (sélénium/platine) R¹ égal à 0,5.

Exemple 2 : préparation de nanoparticules de catalyseur tolérant au méthanol constituées de platine supporté sur du carbone et recouvert d'une sous-monocouche de sélénium en un ratio molaire R (sélénium/platine) égal à 0,2 (PtSe_{0,2}/C) selon le procédé (P1).

Pour aboutir à des nanoparticules de catalyseur tolérant au méthanol constituées de platine supporté sur du carbone et recouvert d'une sous-monocouche de sélénium en un ratio molaire (sélénium/platine) égal à 0,2 (PtSe_{0,2}/C), des nanoparticules de catalyseur de l'exemple 1 ont été utilisées comme nanoparticules de départ.

Des nanoparticules de catalyseur de l'exemple 1 ont été introduites dans une cellule électrochimique thermostatée comprenant :
- une électrode en or comme électrode de travail, ayant une surface de 0,071 cm²,
- une électrode en carbone vitreux comme électrode auxiliaire,
- une l'électrode réversible à hydrogène (ERH) comme électrode de référence, et
- une solution électrolytique acide comprenant de l'eau, de l'acide sulfurique (96%, Merck) en une concentration molaire égale à 0,5M et du méthanol (99,9%, Sigma-Aldrich) en une concentration molaire égale à 0,5M.

Les nanoparticules de catalyseur ont été déposées par nébulisation à l'argon à la surface de l'électrode de travail en une masse spécifique de 0.27 mg/cm², correspondant à une masse totale de 20µg de nanoparticules de catalyseur.

Un potentiel d'oxydation de 1,1V a ensuite été appliqué au sein de la cellule électrochimique, au moyen d'un potentiostat.

Le potentiel d'oxydation a été appliqué sous atmosphère saturée en azote pendant un temps de 10, 15, 20, 25 et 30 minutes, appelé durée de stripping.

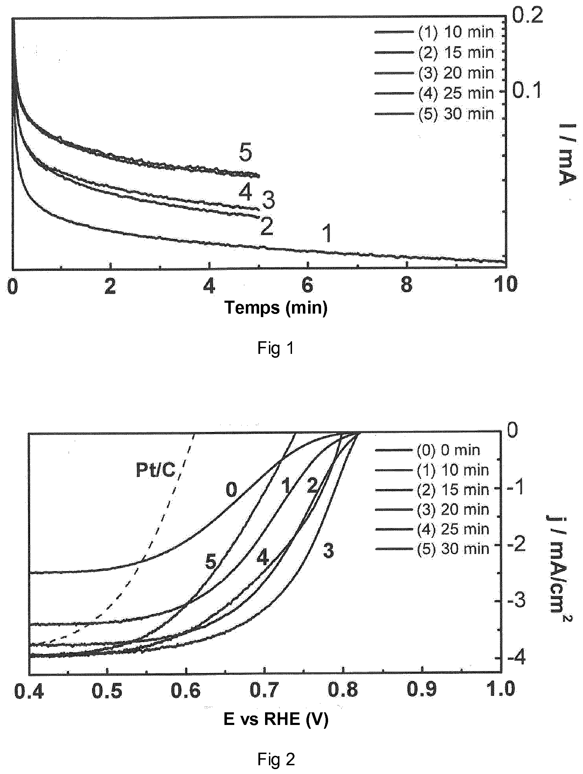

On peut observer sur la figure 2 que, lorsque le temps de stripping augmente, la région mixte de la courbe cathodique pour la réaction de réduction du dioxygène s'agrandit.

Ceci se manifestant par le fait que le potentiel de demi-vague E_{1/2} augmente tandis que le potentiel de circuit ouvert (OCP) reste constant.

Pour le catalyseur comprenant du platine supporté sur du carbone ou Pt/C, représenté par une ligne pointillée sur la figure 2, le potentiel de circuit ouvert se déplace vers un potentiel plus négatif. Ce potentiel mixte provient de l'oxydation électrochimique simultanée du méthanol et de la réaction de réduction du dioxygène.

Cela signifie que le catalyseur comprenant du platine supporté sur du carbone mais en l'absence d'une sous-monocouche de sélénium est moins tolérant au méthanol.

Le potentiel de demi-vague E_{1/2} pour chaque temps de stripping a été déterminé par la mesure du potentiel pour lequel l'intensité de courant est égale à la moitié de l'intensité de courant de diffusion limite.

A chaque valeur de potentiel de demi-vague correspond une composition spécifique de catalyseur, caractérisée par un ratio molaire R (sélénium/platine) spécifique.

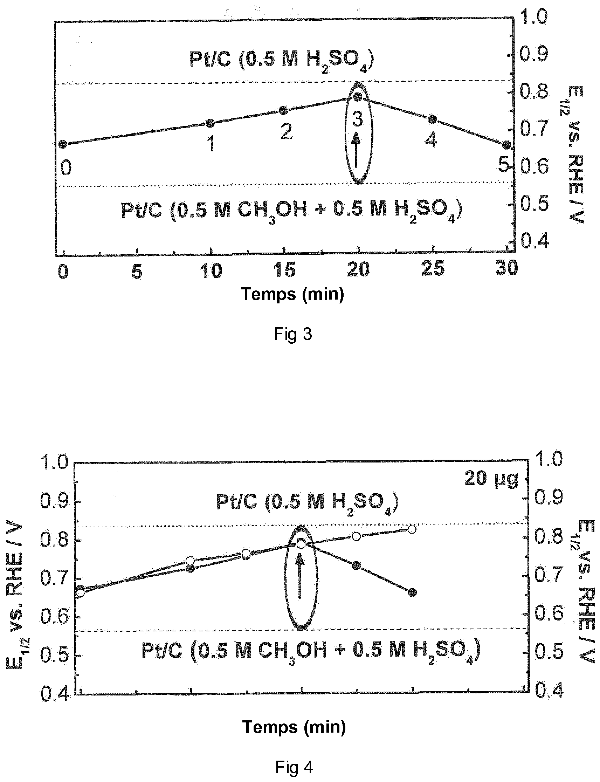

La figure 3 montre que le potentiel de demi-vague du catalyseur atteint un plateau pour une durée de stripping égal à 20 min, correspondant à une valeur proche de 0,8 V.

Pour cette durée de stripping et à cette valeur du potentiel de demi-vague, le taux de recouvrement de sélénium présente la plus grande activité pour la réaction de réduction du dioxygène (voir la courbe 3 de la figure 2) tout en étant plus tolérant à l'empoisonnement au méthanol.

Pour cette durée de stripping égal à 20 min et à cette valeur du potentiel de demi-vague proche de 0,8 V, le taux de recouvrement résiduel du platine supporté par le sélénium a été déterminé à une valeur allant 0,15 à 0,2.

Pour cela, la méthode par dépôt sous potentiel (underpotential deposition of hydrogen) a été utilisée comme décrit par exemple dans Elezovic et *al* (Elezovic et al, Int. J. Hydrogen Energy 32 (2007), 1991-1998)

A partir de ce taux résiduel, le ratio molaire (sélénium/platine) a été déterminé à une valeur de proche de 0,2.

Pour cela, la détermination de la surface active par dépôt sous potentiel d'hydrogène ou par CO-stripping a été réalisée, conjuguée à des mesures physiques de microscopie électronique à transmission à l'aide de la fluorescence-X.

Ainsi, il a été déterminé que l'activité électrocatalytique maximale pour la réaction de réduction du dioxygène en présence de méthanol combinée à une tolérance au méthanol améliorée est obtenue pour un catalyseur comprenant du platine supporté sur du carbone et recouvert d'une sous-monocouche de sélénium en un ratio molaire R (sélénium/platine) proche de 0,2.

### Exemple 3 : évaluation de l'influence de la quantité de catalyseur PtSe_{0,5} déposée à la surface de l'électrode de travail sur la détermination de la valeur maximale du potentiel de demi-vague

Le procédé selon les exemples 1 et 2 a été reproduit pour des quantités de catalyseurs PtSe_{0,5} déposée à la surface de l'électrode de travail de 20µg, de 81 µg et de 162 µg.

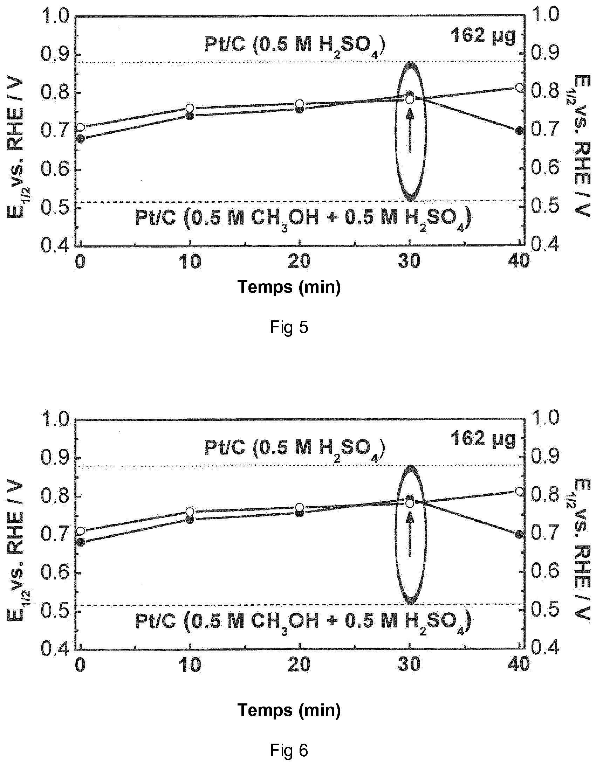

Les résultats décrits aux figures 4, 5 et 6, montrent que la valeur maximale du potentiel de demi-vague E_{1/2} ne varie que très peu en fonction de la quantité de catalyseur déposée à la surface de l'électrode de travail, cette valeur restant proche de 0,8V.

Par ailleurs, l'utilisation de différentes quantités de catalyseurs a permis de déterminer le temps de stripping optimal utilisé pour activer le catalyseur.

Le temps de stripping optimal correspond au temps pour lequel la valeur du potentiel de demi-vague E_{1/2} est maximal, et donc pour lequel l'activité électrocatalytique est maximale.

Pour le catalyseur PtSe_{0,5}, le temps de stripping optimal (tₛₜᵣᵢₚ*) est lié à la quantité de catalyseur (m_{cat}) utilisée par la relation tₛₜᵣᵢₚ* = 0.07m_{cat} + 18.87.

Ainsi, il est possible de déterminer, pour différentes natures de catalyseur, le temps de stripping optimal pour activer le catalyseur ; ceci permettant ainsi, dans le cadre d'une production industrielle de ce catalyseur, de simplifier et/ou d'optimiser son procédé de fabrication.

Exemple 4 : évaluation de la densité de puissance en (mW.cm⁻²) en fonction de la densité de courant (mA.cm⁻²) de nanoparticules de catalyseurs ayant un ratio molaire R (sélénium/platine) égal à 0,2 (PtSe_{0,2}/C) dans une pile à combustible au méthanol direct (DMFC) à une température de 30°C, 50°C et 80°C.

Le procédé selon l'exemple 1 a été reproduit pour une quantité de catalyseur PtSe_{0,2} déposée à la surface de la cathode en une masse spécifique de 0,9 mg.cm⁻² de Pt.

La pile à combustible au méthanol direct est composée d'un assemblage MEA (membrane electrode assembly) comprenant une membrane Nafion^{®} N212 (DuPont) intercalée entre l'anode et la cathode. Une face de cette membrane est recouverte de nanoparticules de catalyseur PtRu/C servant d'anode en une masse spécifique de 1,5 mg.cm⁻² de Pt ; et l'autre face de cette membrane est recouverte de nanoparticules de catalyseur PtSe_{0,2}/C servant de cathode en une masse spécifique de 0,9 mg.cm⁻² de Pt.

Les valeurs de la densité de puissance (mW.cm⁻²) en fonction de la densité de courant (mA.cm⁻²) ont été obtenues dans les conditions expérimentales suivantes :
- une solution aqueuse comprenant du méthanol (99,9% Sigma-Aldrich) en une concentration molaire égale à 2M,
- un débit de la solution aqueuse de 100 mL.min⁻¹,
- un débit d'oxygène à pression atmosphérique.

On peut observer que la valeur maximale de la densité de la puissance de l'assemblage MEA comprenant les nanoparticules de catalyseur dont le ratio molaire R (sélénium/platine) est égal à 0,2 (PtSe_{0,2}/C) est égale à 21 mW.cm⁻² à une température de 80°C.

### Exemple 5 : comparaison des densités de puissance de nanoparticules de catalyseur dont le ratio molaire R (sélénium/platine) est égal à 0,2 (PtSe_{0,2}/C) et d'un catalyseur (Pt/C) dans une pile à combustible au méthanol direct

Une quantité de catalyseur Pt/C a été déposée à la surface de la cathode en une masse spécifique de 1 mg.cm⁻² de Pt.

Les valeurs de la densité de puissance (mW.cm⁻²) en fonction de la densité de courant (mA.cm⁻²) ont été obtenues dans les conditions expérimentales identiques à celles de l'exemple 4 pour une pile à combustible au méthanol direct.

On peut observer que la valeur maximale de la densité de la puissance de l'assemblage MEA comprenant les nanoparticulesPt/C dans une pile à combustible au méthanol direct est égale à 7 mW.cm⁻², à une température de 80°C.

On peut observer que, les valeurs de la densité de puissance des nanoparticules de catalyseur ayant un ratio molaire R (sélénium/platine) égal à 0,2 (PtSe_{0,2}/C) correspondent respectivement à 6 mW.cm⁻² pour une température de 30°C, à 12 mW.cm⁻² pour une température de 50°C et à 21 mW.cm⁻² pour une température de 80°C. Ces valeurs sont toujours supérieures aux valeurs de la densité de puissance des catalyseurs Pt/C quelque soit la température. On peut également observer que la valeur de la densité de puissance des nanoparticules de catalyseur ayant un ratio molaire R (sélénium/platine) égal à 0,2 (PtSe_{0,2}/C) est trois fois plus élevée que la valeur de la densité de puissance des catalyseurs Pt/C à une température de 80°C.

Exemple 6 : évaluation de la densité de puissance (mW.cm⁻²) et du potentiel E de la cathode et de l'anode (V/RHE) en fonction de la densité de courant (mA.cm⁻²) des nanoparticules de catalyseurs ayant un ratio molaire R (sélénium/platine) égal à 0,2 (PtSe_{0,2}/C) dans une pile microfluidique de type LFFC (laminar flow fuel cell) ou de type MRFC (mixed-reactant fuel cell), à température de 25°C.

Le procédé selon l'exemple 1 a été reproduit pour une quantité de catalyseur PtSe_{0,2} déposée à la surface de la cathode en une masse spécifique de 0,9 mg.cm⁻² de Pt.

La pile microfluidique de type LFFC (laminar flow fuel cell) et la pile microfluidique de type MRFC (mixed-reactant fuel cell) fonctionnent en mode autotranspirant pour la cathode ; ce mode étant connu par l'homme du métier.

La pile microfluidique de type LFFC est composée :
- d'une anode dont la surface est recouverte de nanoparticules de catalyseur PtRu/C en une masse spécifique de 1,5 mg.cm⁻² de Pt,
- d'une cathode dont la surface est recouverte de nanoparticules de catalyseur PtSe_{0,2}/C en une masse spécifique de 0,9 mg.cm⁻² de Pt,
- d'un microcanal SU-8 de géométrie 10-750 ayant une hauteur de 250 µm, une largeur de 750 µm et une longueur de 2000 µm.

Les valeurs pour la densité de puissance (mW.cm⁻²) et pour le potentiel de la cathode et de l'anode (V/RHE) en fonction de la densité de courant (mA.cm⁻²) pour la pile microfluidique de type LFFC ont été obtenues avec les conditions expérimentales suivantes :
- un flux d'une solution électrolytique comprenant de l'acide sulfurique (Sigma-Aldrich) à une concentration de 0,5M et comprenant du méthanol (99,9% Sigma-Aldrich) en une concentration molaire égale à 5M,
- un second flux d'une solution électrolytique comprenant de l'acide sulfurique (Sigma-Aldrich) à une concentration de 0,5M sans méthanol,
- un débit des deux solutions électrolytiques de 3,4 mL.min⁻¹.

La pile microfluidique de type MRFC est composée :
- d'une anode dont la surface est recouverte de nanoparticules de catalyseur PtRu/C en une masse spécifique de 1,5 mg.cm⁻² de Pt,
- d'une cathode dont la surface est recouverte de nanoparticules de catalyseur PtSe_{0,2}/C en une masse spécifique de 0,9 mg.cm⁻² de Pt,
- d'un microcanal SU-8 de géométrie 10-750.

Les valeurs pour la densité de puissance (mW.cm⁻²) et pour le potentiel de la cathode et de l'anode (V/RHE) en fonction de la densité de courant (mA.cm⁻²) pour la pile microfluidique de type LFFC ont été obtenues avec les conditions expérimentales suivantes :
- un flux d'une solution électrolytique comprenant de l'acide sulfurique (Sigma-Aldrich) à une concentration de 0,5M et comprenant du méthanol (99,9% Sigma-Aldrich) en une concentration molaire égale à 5M,
- un second flux d'une solution électrolytique comprenant de l'acide sulfurique (Sigma-Aldrich) à une concentration de 0,5M sans méthanol
- un débit de cette solution électrolytique de 3,4 mL.min⁻¹.

On peut observer que, les valeurs de potentiel à circuit ouvert de la cathode sont respectivement, pour la pile microfluidique de type LFFC et pour la pile microfluidique de type MRFC, de 0,8 V et de 0,79V. Cette faible différence de potentiel entre ces deux types de piles microfluidiques montre que les nanoparticules de catalyseurs selon l'invention sont très sélectives par rapport au milieu électrolytique.

On peut également observer que, la valeur maximale de la densité de la puissance des nanoparticules de catalyseurs ayant un ratio molaire R (sélénium/platine) égal à 0,2 (PtSe_{0,2}/C), dans une pile microfluidique de type LFFC ou de type MRFC est respectivement égale à 3 mW.cm⁻² et à 3,7 mW.cm⁻², à température de 25°C. Cette faible différence entre la densité de la puissance pour une pile microfluidique de type LFFC comprenant les nanoparticules de catalyseur selon l'invention et de la densité de la puissance pour une pile microfluidique de type MFRC comprenant des nanoparticules de catalyseurs selon l'invention, montre que les nanoparticules de catalyseur selon l'invention ne se détériorent pas en présence de méthanol et qu'elles conservent une activité électrocatalytique constante et durable.

Ces résultats montrent que les nanoparticules de catalyseur selon l'invention ont des comportements similaires et conservent leur efficacité catalytique quel que soit le type de pile microfluidique (LFFC ou MFRC).

## Revendications

1. Procédé (P2) de préparation de nanoparticules d'un catalyseur tolérant au méthanol comprenant
a) un centre métallique comprenant au moins un métal de transition supporté ou non supporté et choisi parmi le platine, le ruthénium, le palladium, le rhodium ou l'iridium ;
(b) une sous-monocouche d'un atome de chalcogène choisi parmi le sélénium ou le soufre, ladite monocouche étant le recouvrement du centre métallique par une couche discontinue d'atome de chalcogène à la surface du centre métallique ;
comprenant
i) la préparation sous agitation d'un mélange du métal de transition supporté ou non supporté avec un mélange d'eau et d'isopropanol, le ratio volumique eau/isopropanol étant compris entre 2/1 et 10/1 pendant une durée allant de 5 à 60 minutes ;
ii) l'addition d'un composé inorganique comprenant un chalcogène en un ratio molaire chalcogène/métal de transition inférieur ou égal à 1;
iii) l'agitation à une température allant de 20 à 50°C pendant une durée allant de 5 à 24 heures;
iv) l'évaporation de l'eau et de l'isopropanol ;
v) la calcination, sous atmosphère inerte, à une température allant de 100 à 400°C, pendant une durée allant de 30 min à 2 heures.

2. Procédé (P2) selon la revendication 1 pour lequel le ratio v/v eau/isopropanol de l'étape (i) va de 3/1 à 7/1.

3. Procédé (P2) selon l'une des revendications 1 ou 2 pour lequel le composé inorganique de l'étape (ii) comprenant un chalcogène est choisi parmi les oxydes et les sels.

4. Procédé (P2) selon l'une des revendications 1 à 3 pour lequel le composé inorganique de l'addition (ii) est un composé inorganique comprenant un chalcogène en un ratio molaire chalcogène/métal de transition allant de 0,001 à 1.

5. Procédé (P2) selon l'une des revendications 1 à 4 pour lequel l'agitation (iii) est réalisée à une température allant de 20 à 50°C pendant une durée allant de 10 à 20 heures.

6. Procédé (P2) selon l'une des revendications 1 à 5 pour lequel l'évaporation de l'eau et de l'isopropanol de l'étape (iv) est effectuée par chauffage sous atmosphère contrôlée.

7. Procédé (P2) selon l'une des revendications 1 à 6 pour lequel le ratio molaire chalcogène/centre métallique est inférieur à 0,5.

8. Procédé (P2) selon l'une des revendications 1 à 7 pour lequel les nanoparticules de catalyseur issues du procédé (P2) sont déposées à la surface d'une cathode constitutive d'une pile, dans une quantité allant de 0,1 à 2 mg par cm² de cathode.

9. Procédé (P2) selon la revendication 1 pour lequel le ratio v/v eau isopropanol de l'étape (i) est égal à 5/1.

10. Procédé (P2) selon l'une des revendications 1 ou 2 pour lequel le composé ionorganique de l'étape (ii) comprenant un chalcogène est choisi parmi l'oxyde de sélénium et le sulfure de sodium.

11. Procédé (P2) selon l'une quelconque des revendications 1 à 6 pour lequel le ratio molaire chalcogène/centre métallique est inférieur ou égal à 0,3.

12. Procédé (P2) selon l'une quelconque des revendications 1 à 6 pour lequel le ratio molaire chalcogène/centre métallique va de 0,1 à 0,3.

## Patentansprüche

1. Verfahren (P2) zur Herstellung von Nanopartikeln eines Methanol-toleranten Katalysators
umfassend
(a) ein Metallzentrum, das mindestens ein geträgertes oder nicht geträgertes Übergangsmetall, ausgewählt aus Platin, Ruthenium, Palladium, Rhodium oder Iridium, umfasst
(b) eine Sub-Monoschicht eines Chalkogenatoms, ausgewählt aus Selen oder Schwefel, wobei die Monoschicht die Bedeckung des Metallzentrums durch eine diskontinuierliche Schicht von Chalkogenatomen auf der Oberfläche des Metallzentrums ist;
umfassend
i) Herstellen einer Mischung des geträgerten oder nicht geträgerten Übergangsmetalls mit einer Mischung aus Wasser und Isopropanol unter Rühren, wobei das Volumenverhältnis von Wasser zu Isopropanol zwischen 2:1 und 10:1 liegt, über einen Zeitraum von 5 bis 60 Minuten
ii) Zugabe einer anorganischen Verbindung, die ein Chalkogen in einem molaren Verhältnis Chalkogen/Übergangsmetall von weniger als oder gleich 1 enthält
iii) Rühren bei einer Temperatur von 20 bis 50 °C über einen Zeitraum von 5 bis 24 Stunden
(iv) Verdampfen von Wasser und Isopropanol
v) Kalzinierung unter inerter Atmosphäre bei einer Temperatur von 100 bis 400°C über einen Zeitraum von 30 Minuten bis 2 Stunden.

2. Verfahren (P2) nach Anspruch 1, bei dem das Wasser/Isopropanol-Verhältnis (v/v) von Schritt (i) im Bereich von 3/1 bis 7/1 liegt.

3. Verfahren (P2) nach einem der Ansprüche 1 oder 2, bei dem die anorganische Verbindung aus Schritt (ii), die ein Chalkogen umfasst, aus Oxiden und Salzen ausgewählt ist.

4. Verfahren (P2) nach einem der Ansprüche 1 bis 3, bei dem die anorganische Verbindung der Stufe (ii) eine anorganische Verbindung ist, die ein Chalkogen in einem Molverhältnis Chalkogen/Übergangsmetall von 0,001 bis 1 enthält.

5. Verfahren (P2) nach einem der Ansprüche 1 bis 4, wobei das Rühren (iii) bei einer Temperatur im Bereich von 20 bis 50°C für eine Zeit im Bereich von 10 bis 20 Stunden durchgeführt wird.

6. Verfahren (P2) nach einem der Ansprüche 1 bis 5, bei dem die Verdampfung des Wassers und des Isopropanols aus Schritt (iv) durch Erhitzen unter kontrollierter Atmosphäre durchgeführt wird.

7. Verfahren (P2) nach einem der Ansprüche 1 bis 6, bei dem das molare Verhältnis von Chalkogen zu Metallzentrum weniger als 0,5 beträgt.

8. Verfahren (P2) nach einem der Ansprüche 1 bis 7, bei dem die Katalysator-Nanopartikel aus dem Verfahren (P2) auf der Oberfläche einer Kathode, die eine Zelle bildet, in einer Menge von 0,1 bis 2 mg pro cm² der Kathode abgeschieden werden.

9. Verfahren (P2) nach Anspruch 1, bei dem das Verhältnis v/v Wasser/Isopropanol von Schritt (i) gleich 5/1 ist.

10. Verfahren (P2) nach einem der Ansprüche 1 oder 2, bei dem die ionorganische Verbindung des Schritts (ii), die ein Chalkogen enthält, aus Selenoxid und Natriumsulfid ausgewählt wird.

11. Verfahren (P2) nach einem der Ansprüche 1 bis 6, bei dem das molare Verhältnis von Chalcogen zu Metallzentrum kleiner oder gleich 0,3 ist.

12. Verfahren (P2) nach einem der Ansprüche 1 bis 6, wobei das Molverhältnis von Chalkogen zu Metallzentrum im Bereich von 0,1 bis 0,3 liegt.

## Claims

1. A method (P2) for preparing nanoparticles of a catalyst tolerant to methanol comprising
a) a metal center comprising at least one transition metal either supported or not supported and selected from platinum, ruthenium, palladium, rhodium or iridium;
(b) a sub-monolayer of a chalcogen atom selected from selenium or sulphur, said monolayer being the covering of the metal center by a discontinuous layer of chalcogen atom on the surface of the metal center;
comprising
i) preparing with stirring a mixture of the transition metal either supported or not supported with a mixture of water and isopropanol, the volume ratio of water to isopropanol ranging from 2/1 to 10/1 for a period ranging from 5 to 60 minutes;
ii) adding an inorganic compound comprising a chalcogen in a chalcogen/transition metal molar ratio of less than or equal to 1;
(iii) stirring at a temperature ranging from 20 to 50°C for a period ranging from 5 to 24 hours;
(iv) evaporating the water and the isopropanol;
(v) calcinating, under an inert atmosphere, at a temperature ranging from 100 to 400°C, for a period ranging from 30 min to 2 hours.

2. The method (P2) according to claim 1 for which the water/isopropanol v/v ratio of step (i) ranges from 3/1 to 7/1.

3. The method (P2) according to any of claims 1 or 2 for which the inorganic compound of step (ii) comprising a chalcogen is selected from oxides and salts.

4. The method (P2) according to any of claims 1 to 3 for which the inorganic compound of adding (ii) is an inorganic compound comprising a chalcogen in a chalcogen/transition metal molar ratio ranging from 0.001 to 1.

5. The method (P2) according to any of claims 1 to 4 for which the stirring (iii) is carried out at a temperature ranging from 20 to 50°C for a period ranging from 10 to 20 hours.

6. The method (P2) according to any of claims 1 to 5 for which the evaporating of the water and the isopropanol of step (iv) is carried out by heating under controlled atmosphere.

7. The method (P2) according to any of claims 1 to 6 for which the chalcogen/metal center molar ratio is less than 0.5.

8. The method (P2) according to any of claims 1 to 7 for which the nanoparticles of the catalyst from the process (P2) are deposited on the surface of a cathode constituting a cell, in an amount ranging from 0.1 to 2 mg per cm² of cathode.

9. A method (P2) according to claim 1 for which the water/isopropanol v/v ratio of step (i) is equal to 5/1.

10. The method (P2) of any of claims 1 or 2 for which the ionorganic compound of step (ii) comprising a chalcogen is selected from selenium oxide and sodium sulphide.

11. The method (P2) according to any one of claims 1 to 6 for which the chalcogen/metal center molar ratio is less than or equal to 0.3.

12. The method (P2) according to any one of claims 1 to 6 wherein the chalcogen/metal center molar ratio ranging from 0.1 to 0.3.
